# EUROPEAN PATENT APPLICATION

(11) **EP 4 632 670 A1**
(43) Date of publication of application: **15.10.2025**
(21) Application number: 24168919.9
(22) Date of filing: 08.04.2024
(51) Int. Cl.: G06T 7/00

(54) **COMPUTER-IMPLEMENTED METHOD FOR THE ANALYSIS OF IMAGES, ESPECIALLY IN THE FIELD OF CONSTRUCTION**

(71) Applicant: Sika Technology AG, 6340 Baar (CH)
(72) Inventor: KUNDRA, Milan, 94230 Cachan (FR); VELTEN, Ulf, 8955 Oetwil an der Limmat (CH); WEINKAUF, Annette, 5603 Staufen (CH)
(74) Representative: Sika Patent Attorneys

(57) **Abstract**

The present invention is related to computer-implemented methods for the analysis of images. Methods of the present invention include a step of selecting, by a machine learning master-algorithm, at least one analysis-algorithm suitable for a particular analytical problem, said machine learning master-algorithm being trained to determine which analysis-algorithm is suitable for analyzing a given digital image of an analyte.

## Description

### Technical Field

The present invention is related to computer-implemented methods for the analysis of images. The present invention is especially suitable in the field of construction materials.

### Background of the invention

The analysis of materials by image analysis is well known for many years in various industries. Especially, image analysis of raw materials or of finished goods for purposes of quality control is widely used. Also, image analysis of biological materials such as tissue or cells is widely used, for example for diagnostic purposes.

Computer-implemented methods for the image analysis of materials have been implemented in recent years. For example, WO 2013/171176 (Isra Vision AG) discloses a method and device for the inspection of surfaces by image analysis to detect surface anomalies and EP 4249899 (Evonik Operations GmbH) discloses a method for the inspection of a coated surface to detect surface defects. Another example is WO 2022/258715 (Sika Technology AG) disclosing a method for the image analysis of particles to determine shape and/or size distribution.

More recently, machine learning algorithms, artificial intelligence, or neural networks have been used for the analysis of images. A system is for example disclosed in WO 2023/003669 (Sortera Alloys Inc).

For any user it is necessary to select the correct analytical method suitable for the corresponding analytical problem. In the case of computer-implemented analytical methods this typically implies the use of a specific software program. Typically, such software program, or app, needs to be downloaded and installed on a computer device. Especially users faced with different analytical problems need to download, store, select between, and operate different software programs. This may pose problems in terms of storage capacity, computing time, and proper method selection. Additionally, in the field of image analysis, it may be difficult for a user, based on the image alone, to decide which analytical method to select. This is particularly the case where the image to be analyzed only contains a minimum of information and is provided without additional context.

It would therefore be desirable to provide improved methods for image analysis to solve these and other drawbacks.

### Summary of the invention

Surprisingly, it has been found that a machine learning algorithm, when receiving an image of an analyte, can identify a suitable analytical method to analyze the image received, and transfer the image to an algorithm suitable for analysis. In the following, such machine learning algorithm is also called the master-algorithm. In particular, the machine learning master-algorithm is trained based on images of analytes and analytical methods and/or results associated therewith.

The objective of the present invention is therefore solved by the subject matter of claim 1.

Methods of the present invention include a step of selecting, by a machine learning master-algorithm, at least one analysis-algorithm suitable for a particular analytical problem, said machine learning master-algorithm being trained to determine which analysis-algorithm is suitable for analyzing a given digital image of an analyte.

It has further been found that such machine learning master-algorithm can be suitably incorporated into methods of modelling the chemical and/or physical properties of analytes, and/or of controlling a production unit configured to process the analyte, or controlling a quality control system configured to allow, to refuse, and/or to label the analyte.

Further aspects of the present invention are the subject matter of independent claims. Preferred embodiments are the subject matter of dependent claims.

### Detailed Ways

In a first aspect the present invention relates to a computer-implemented method for the analysis of images comprising the steps of
(i) taking at least one digital image of an analyte by means of a camera,
(ii) inputting the at least one digital image into a machine learning master-algorithm,
(iii) selecting, using the machine learning master-algorithm, at least one analysis-algorithm from a list of pre-defined analysis-algorithms,
(iv) transferring the digital image to the selected analysis-algorithm,
(v) analyzing the digital image by the selected analysis-algorithm,
(vi) making available the result of analysis obtained in step (v) via the machine learning master-algorithm and/or via a user interface, via a machine interface, on a data storage medium.

Within the present context, a camera can be any device suitable for taking a digital image. For example, a camera can be a digital camera or a video camera. A camera can be integrated into a handheld device such as a smartphone. A camera can also be integrated into a body mounted device such as a body cam, a smart glass, an augmented reality device, or a virtual reality device. Within the present context, a camera can also be a camera for taking analogue images coupled to a device transforming the analogue image into a digital image. However, this is less preferred.

The camera can be an internal camera of a computer device or an external camera connectable to a computer device. The connection between the external camera and the computer device can be a wired and/or a wireless connection.

Preferably, the camera is a camera for taking images in the visible spectrum, especially color images. Color images allow for considering color properties of the analyte. Thus, preferably, the at least one digital image taken in step (i) is a color image. However, if color information is not required, other cameras, e.g. monochromatic cameras, can be used as well. In this case, the image is a monochromatic image, e.g. a black-and-white image. It is likewise possible to use a camera for taking images outside the visible spectrum, e.g. in the infrared and/or ultraviolet range of the electromagnetic spectrum. Such cameras can be used alternatively or in addition to other cameras. In this case the properties of the analyte in spectral ranges outside the visible spectrum can be considered in step (iii).

Taking a digital image of the analyte can be done while the analyte is in motion or while the analyte is motionless. For example, it is possible that the camera is mounted over a device over which the analyte is moved such as a conveyor belt. It is also possible that the analyte is spread on a sampling area and/or the camera is mounted over the analyte.

For example, the at least one digital image can be taken from a surface, especially a flat surface, of the analyte. Thereby, preferably, the surface is oriented vertically or horizontally.

It is also possible that the analyte is crushed, cut, ground, thin-sectioned and/or polished before and/or during step (i). However, such treatments of the analyte are optional and can be omitted.

According to embodiments, the analyte is subjected to a surface treatment to increase a contrast between a continuous phase and constituents of the analyte. For example, the surface treatment is selected from coloring with an ink, depositing of a metal, treating with a luminescent dye, and/or polishing with a powder and/or paste.

It can be preferred to place a reference scale on and/or next to the analyte. A reference scale might for example be a character, a geometrical form, a ruler and/or a reference object of known size. This allows for a precise determination of the size of the analyte and/or the structure of the analyte to be analyzed. Preferably, the machine learning master-algorithm is configured for automatically determining the size of the analyte based on the reference scale.

Taking the at least one digital image of the analyte with the camera preferably is performed under daylight conditions and/or with a light source, e.g. a flashlight, for illuminating the analyte. Thereby, the light used for illuminating the analyte preferably is well dispersed in order to avoid shadows and light inhomogeneities.

Especially, the camera is aligned plane-parallel if its optical axis runs perpendicular to the analyte, the predefined sample area and/or the flat surface of the analyte. The optical axis is an imaginary line that defines the path along which light propagates through the camera system. However, the method can be implemented as well with a non-plane-parallel alignment of the camera.

Very preferably, the at least one digital image of the analyte comprises at least two distinct elements having differences in color such as different hue, different gloss, and/or different RGB value, or differences in grey scale.

The analyte is not particularly limited. Any material having a continuous phase and distributed constituents within said continuous phase which are optically distinguishable can be an analyte within the present context. Very preferably, the analyte of the present invention is a material used in the construction industry. For example, the analyte can be a raw material of a construction composition, a formulated construction composition, a cured construction composition, or a construction tool.

According to embodiments the analyte is selected from an assembly of loose particles; particles incorporated into an organic or inorganic binder matrix; a surface comprising holes, voids, bubbles, pores, or cracks; a surface having domains of differing color; a surface having efflorescence; a dispersion, in particular a foam, an aerosol, a suspension, or an emulsion; a flowable material; a surface of a construction material, in particular a coated surface, a surface of a cured mineral binder composition, a surface of an adhesive or sealant, a surface of a thermoplastic sheet; a composite material such as a multi-material composite; a fractured material.

It is clear that the analysis-algorithm must be suitable to operate according to the respective analytical method. This allows to answer to the analytical question.

In particular, where the analyte is selected from an assembly of loose particles, the analysis-algorithm is selected from algorithms suitable to determine at least one of particle size distribution, particle shape, surface area, or color distribution. Where particles are crystalline or comprise crystalline phases, the analysis algorithm can also be selected from algorithms suitable to determine the crystal system or geology of the particles.

In particular, where the analyte is selected from particles incorporated into an organic or inorganic binder matrix, the analysis-algorithm is selected from algorithms suitable to determine at least one of particle size distribution, particle shape, surface area, color distribution, ratio of particles, or ratio of binder matrix.

In particular, where the analyte is selected from a surface comprising holes, voids, bubbles, or pores, the analysis-algorithm is selected from algorithms suitable to determine the size distribution of holes, voids, bubbles, or pores, and/or the number of holes, voids, bubbles, or pores per surface area.

In particular, where the analyte is selected from a surface comprising cracks, the analysis-algorithm is selected from algorithms suitable to determine the width and/or length of cracks and/or the number of cracks per surface area.

In particular, where the analyte is selected from a surface having domains of differing color, the analysis-algorithm is selected from algorithms suitable to determine the area and/or distribution of domains of different color.

In particular, where the analyte is selected from a surface having efflorescence, the analysis-algorithm is selected from algorithms suitable to determine the area percentage of efflorescence relative to the total surface.

In particular, where the analyte is selected from a dispersion, in particular a foam, an aerosol, a suspension, or an emulsion, the analysis-algorithm is selected from algorithms suitable to determine the size distribution of dispersed material or the volume ratios of dispersed and continuous phases.

In particular, where the analyte is selected from a flowable material such as a slurry or paste of mineral binder composition, the analysis-algorithm is selected from algorithms suitable to determine the flowability, especially suitable to determine the slump flow.

In particular, where the analyte is selected from a surface of a construction material, in particular a coated surface, a surface of a cured mineral binder composition, a surface of an adhesive or sealant, a surface of a thermoplastic sheet, the analysis-algorithm is selected from algorithms suitable to determine the area having coating defects, fracture patterns, bearing area, the binder to aggregate ratio, or segregation.

In particular, where the analyte is selected from a composite material such as a multi-material composite, the analysis-algorithm is selected from algorithms suitable to determine the area of individual constituents or the relative ratios of constituents.

In particular, where the analyte is selected from a fractured material, the analysis-algorithm is selected from algorithms suitable to determine a fracture pattern.

In many cases it will be beneficial if a reference scale is provided with the analyte and is provided to the machine learning master-algorithm and subsequently also to the respective analysis-algorithm.

Means to input the at least one digital image into the machine learning master-algorithm is not particularly limited. In particular, the at least one digital image can be uploaded via a user interface. It is one advantage of the present invention that a user may input digital images of different analytes via only one user interface. The digital images are subsequently analyzed by a suitable analysis-algorithm. It is not necessary to provide one user interface per analytical problem or per analysis-algorithm.

Within the present context a machine learning master-algorithm comprises or consists of a set of rules suitable to classify a digital image. The set of rules is derived from training data.

Training data can be labeled. For example, training data can be a set of digital training images of analytes each digital image attached with an analytical method and at least one suitable analysis-algorithm. However, it is also possible that the training data is not labeled and unstructured. For example, training data can be an unlabeled set of digital images of analytes.

According to embodiments, the machine learning master-algorithm is trained by receiving as input a set of digital training images of analytes each digital image attached with an analytical method and at least one suitable analysis-algorithm, and optionally also type and form of a desired output of the result of analysis.

In particular, the machine learning master-algorithm is trained on a set of digital images of analytes each digital image as independent variables and an analytical method and at least one suitable analysis-algorithm as dependent variables. Thereby, for example, the machine learning master-algorithm generates a number of functional relationships suitable to select at least one suitable analysis-algorithm from a list of predefined analysis-algorithms for an inputted digital image.

In particular, the machine learning master-algorithm is trained with a set of digital images of assemblies of loose particles; particles incorporated into an organic or inorganic binder matrix; surfaces comprising holes, voids, bubbles, pores, or cracks; surfaces having domains of differing color; surfaces having efflorescence; dispersions, in particular foams, aerosols, suspensions, or emulsions; surfaces of a construction material, in particular coated surfaces, surfaces of a cured mineral binder composition, surfaces of an adhesive or sealant, surfaces of a thermoplastic sheet; composite materials such as a multi-material composite; fractured materials.

Training data consists, for example, of digital images of an assembly of loose particles, together with the information that at least one of particle size distribution, particle shape, surface area, color distribution, crystal system, or geology should be analyzed and together with information about which analysis-algorithm is suitable for such analysis.

Training data consists, for example, of digital images of particles incorporated into an organic or inorganic binder matrix, together with the information that at least one of particle size distribution, particle shape, surface area, color distribution, ratio of particles, or ratio of binder matrix should be analyzed and together with information about which analysis-algorithm is suitable for such analysis.

Training data consists, for example, of digital images of a surface comprising holes, voids, bubbles, or pores, together with the information that the size distribution of holes, voids, bubbles, or pores, and/or the number of holes, voids, bubbles, or pores per surface area should be analyzed and together with information about which analysis-algorithm is suitable for such analysis.

Training data consists, for example, of digital images of a surface comprising cracks, together with the information that the width and/or length of cracks and/or the number of cracks per surface area should be analyzed and together with information about which analysis-algorithm is suitable for such analysis.

Training data consists, for example, of digital images of a surface having domains of differing color, together with the information that the area of each domain should be analyzed and together with information about which analysis-algorithm is suitable for such analysis.

Training data consists, for example, of digital images of a surface having efflorescence, together with the information that the area percentage of efflorescence relative to the total surface should be analyzed and together with information about which analysis-algorithm is suitable for such analysis.

Training data consists, for example, of digital images of a dispersion, in particular a foam, an aerosol, a suspension, or an emulsion, together with the information that the size distribution of dispersed or the volume ratios of dispersed and continuous phases material should be analyzed and together with information about which analysis-algorithm is suitable for such analysis.

Training data consists, for example, of digital images of a flowable material such as a slurry or paste of mineral binder composition, together with the information that the flowability, especially the slump flow should be analyzed and together with information about which analysis-algorithm is suitable for such analysis.

Training data consists, for example, of digital images of a surface of a construction material, in particular a coated surface, a surface of a cured mineral binder composition, a surface of an adhesive or sealant, a surface of a thermoplastic sheet, together with the information that the area having coating defects, fracture patterns, bearing area, the binder to aggregate ratio, or segregation should be analyzed and together with information about which analysis-algorithm is suitable for such analysis.

Training data consists, for example, of digital images of a composite material such as a multi-material composite, together with the information that the area of individual constituents or the relative ratios of constituents should be analyzed and together with information about which analysis-algorithm is suitable for such analysis.

Training data consists, for example, of digital images of a fractured material together with the information that a fracture pattern should be analyzed and together with information about which analysis-algorithm is suitable for such analysis.

Advantageously, results obtained from the method of the present invention are used to additionally train the machine learning master-algorithm.

Therefore, advantageously, the result of the analysis of step (v) is used to train the machine learning master-algorithm.

The machine learning algorithm can be a supervised learning model, an unsupervised learning model or a semi-supervised learning model. It is preferred that the machine learning algorithm is a supervised learning model. Thereby, training data is used to teach the machine learning algorithm to select the desired analysis-algorithm.

In particular, the machine learning master-algorithm comprises
(i) a decision process suitable to select at least one analysis-algorithm from a list of predefined analysis-algorithms,
(ii) an error function suitable to compare the selection of the at least one analysis-algorithm to the rules derived from the training data,
(iii) a model optimization process suitable to adjust the rules, for example by adjusting weighing factors, to reduce the discrepancy between the training data and the selection of the at least one analysis-algorithm.

Especially, in the decision process (i) the machine learning master-algorithm determines probabilities that an inputted digital image should be analyzed with a given analysis-algorithm. The selection of a suitable analysis-algorithm is done by comparison of the probabilities determined and based on the highest probability. Such probabilities are called analytical method probability.

In the model optimization process (iii) the machine learning master-algorithm may take into account feedback provided by users.

According to embodiments, in step (iii) of a method of the present invention, the machine learning master-algorithm determines a plurality of analytical method probabilities, each analytical method probability representing a probability that the image should be analyzed with the respective analytical method, and selects the analysis-algorithm associated with the analytical method having the highest analytical method probability.

The machine learning master-algorithm can be a deep learning model and/or include at least one neural network. The machine learning master-algorithm can form part of an artificial intelligence system.

According to embodiments, the machine learning master-algorithm is selected from classification algorithms or regression algorithms, preferably from linear classifiers, support vector machines, maximum likelihood classifiers, decision trees, K-nearest neighbors, random forests, linear regression models, logistical regression models, and/or polynomial regression models.

Suitable algorithms include convolutional neural networks (CNN). Examples include the R-CNN, Mask RCNN, Fast R-CNN, Faster R-CNN, spatial pyramid pooling network (SPPNet), spatial pyramid pooling (SPP) layer, YOLO, SSD, DenseNet, and RetinaNet algorithms.

Once the machine learning master-algorithm is trained, a digital image of an analyte may be inputted.

It is possible that the digital image is processed, edited, transformed, filtered, and/or labelled prior to or during step (ii) of a method of the present invention.

In particular, prior to or during step (ii) a mathematical function is applied to the digital image suitable for processing, editing, transforming, filtering, and/or labelling of the image data, preferably a cumulative distribution function or a wavelet transformation, especially a Laplace-Gaussian function.

Application of a cumulative distribution function or a wavelet transformation may be used for removing noise from the digital image.

Application of a cumulative distribution function or a wavelet transformation may cause the machine learning master-algorithm to recognize patterns, for example texture or edges, in the digital image of the analyte. In particular, the algorithm can compare such patterns to training data thereby determining a proper analytical method probability.

In particular, the at least one digital image is improved by the processing, editing, transforming, filtering, and/or labeling. The improvement can be a preparation of the at least one digital image to be analyzed by the analysis-algorithm.

The analysis-algorithms of the present invention are not particularly limited. The list of pre-defined analysis-algorithms contains entries of analysis-algorithms associated with an analytical method or analytical question the respective analysis-algorithm is able to solve.

Algorithms to solve specific analytical problems are known to the skilled person.

It is highly preferred within the present context that the machine learning master-algorithm and the analysis-algorithms are not part of the same application. In particular, the machine learning master-algorithm and the analysis-algorithms are distributed in a distributed computer environment. Especially, in a distributed computer environment, the machine learning master-algorithm is a client, and the analysis-algorithm is a server.

Thereby, it is in particular possible to run the method of the present invention in a distributed computer environment such as a cloud. Less memory space is needed thereby, in particular where two, three, or more image analyses are run in parallel.

The at least one analysis-algorithm may output the result of analysis via a user interface, a machine interface, and/or on a data storage medium. Thereby, the output can take the form of a text-based answer to a question, a symbol, a table, a graph, or a number, preferably attached with a respective unit. In particular, different analysis-algorithms may output the result of analysis in different form, for example in the form of a graph relevant for the respective analytical method. It is also possible for a user to select and/or customize the output of analysis.

It is likewise possible that the at least one analysis-algorithm transfers the result of analysis to the machine learning master-algorithm. The machine learning master-algorithm then outputs the result of analysis via a user interface, a machine interface, and/or on a data storage medium. Thereby, the output can take the form of a text-based answer to a question, a symbol, a table, a graph, or a number, preferably attached with a respective unit.

It is possible that a method of the present invention additionally comprises a step of (ia) attaching an analytical question and/or method to the at least one digital image of the analyte before and/or during inputting the image into the machine learning master-algorithm in step (ii).

For example, the analytical question or method can be attached to the at least one digital image by manually inputting the respective question and/or method. It is likewise possible to attach an analytical question or method to the at least one digital image by selecting the respective question and/or method from a list of pre-defined questions and/or methods, such as for example from a drop down menu.

Where an analytical question or method is attached to the digital image, the machine learning master-algorithm takes into account this information for the calculation of the analytical method probabilities. Therefore, the analytical question and/or method attached to the at least one digital image of the analyte as defined above is used to determine the plurality of analytical method probabilities. For such purpose, the machine learning master-algorithm can contain or be connected with a language model such as, for example, Mistral-7B. Thereby, the machine learning master-algorithm can be additionally trained to recognize text attached to the digital image. It is further possible that the machine learning master-algorithm contains a module transforming speech to text. Thereby, an analytical question and/or an analytical method may be inputted by a user orally and then transformed into machine readable format by the machine learning master-algorithm.

It is additionally possible, that a method of the present invention comprises a step of (vii) modelling, based on the result of analysis, the chemical and/or physical properties of an assembly comprising the analyte.

An assembly comprising the analyte can in particular be a construction material or a building.

For example, where the analyte is a loose assembly of particles, the assembly comprising the analyte can be a mortar or concrete. In such case, additional step (vii) may then be, for example, a modelling of the water demand of fresh mortar or concrete comprising the particles.

For example, where the analyte is a dispersion, the assembly comprising the analyte can be an adhesive or sealant. In such case additional step (vii) may then be, for example, a modelling of the stability of the adhesive or sealant against settling or ripening.

For example, where the analyte is a surface comprising cracks, the assembly comprising such surface can be a building such as a bridge. In such case, additional step (vii) may then be, for example, a modelling of water ingress into the building.

It is possible, that a method of the present invention additionally comprises a step of (viii a) controlling a production unit configured to process the analyte, or (viii b) controlling a quality control system configured to allow, to refuse, and/or to label the analyte.

The expression "controlling" in this context means that the computer-implemented method of the present invention comprises instructions that cause a production unit or a quality control unit to operate in a defined way. This means that, for example, a production unit doses the analyte in a defined amount, or a quality control system labels the analyte with a physical label.

A production unit configured to process the analyte in particular can be a machine suitable to convey, separate, mix, transform, clean, or repair the analyte.

For example, a production unit can be a belt conveyor, a weight scale, a dosing unit, a mixer, a pump, a spraying equipment, a paving machine, a cleaning machine, an injection machine, a grinding machine.

A quality control system configured to allow, refuse, and/or label the analyte in particular can be a machine suitable to separate or label the analyte. In particular the quality control system can sort or separate the analyte according to pre-defined threshold values. It is also possible that the quality control system can attached physical labels on the analyte or on a packaging containing the analyte.

For example, a quality control system can be a sieve or a windsifter.

In another aspect the present invention relates to a non-transitory computer-readable medium storing instructions that, when executed by a computer device, cause the computer device to carry out at least steps (ii) - (vi) of a method as described above.

All features and embodiments described above also apply to this aspect.

Examples of a computer-readable storage medium may include any tangible media capable of storing electronic data, including volatile memory or non-volatile memory, removable or non-removable memory, erasable or non-erasable memory, writeable or rewriteable memory, and so forth. Embodiments may also be at least partly implemented as instructions contained in or on a non-transitory computer-readable medium, which may be read and executed by one or more processors to enable performance of the operations described herein.

According to embodiments, the non-transitory computer-readable medium may be selected from hard disk drives, solid state drives, CD-ROM, DVD, Blu-ray discs, USB Flash Drives, memory cards, magnetic tapes, floppy disks, EPROM, optical drives, magnetic diskettes, compact flash cards, secure digital cards, external hard drives, network attached storage, cloud storage, RAID, 3D XPoint memory.

The invention further includes an apparatus comprising a non-transitory computer-readable storage medium storing logic for a machine learning master-algorithm configured to select at least one analysis-algorithm for the analysis of digital images form a list of pre-defined analysis-algorithms, a hardware interface configured to receive training data, the training data comprising a set of digital images each attached with the corresponding analytical method and/or suitable analysis-algorithm, and a hardware processor circuit configured to train the machine learning master-algorithm based on the training data, receive, via the interface, one or digital images of analytes, and use the machine learning master-algorithm to select at least one suitable analysis-algorithm for the respective digital image.

In another aspect the present invention relates to a system comprising
(a) means for taking at least one digital image of an analyte,
(b) means for providing the at least one digital image of an analyte to a machine learning master-algorithm,
(c) a machine learning master-algorithm trained to select, based on a digital image of an analyte, at least one analysis-algorithm from a list of pre-defined analysis-algorithms,
(d) a set of analysis-algorithms suitable to analyze a digital image of an analyte to determine at least one chemical, physical, or mechanical property of said analyte,
(d) means for sending the digital image from the machine learning master-algorithm to the selected analysis-algorithm,
(e) means for transferring the result of analysis from the at least one analysis-algorithm to the master-algorithm,
(f) means for making available the result of analysis, in particular a user interface, a machine interface and/or a data storage medium.

A physical property of an analyte can be, for example, a size distribution, a shape, a contour, a dimension such as length, width, and depth, a volume, an angle, an area, a color, a grey shade, a mass. A chemical property of an analyte can be, for example, a phase transition temperature, especially a melting point, a softening point, or a boiling point, a chemical composition, an oxidation state. A mechanical property can be, for example, a mechanical strength, in particular flexural strength, compressive strength, or adhesion strength, a bearing surface.

Preferably, the system of the present invention comprises a first computer device storing instructions for the machine learning master-algorithm and at least one further computer device storing instructions for at least one analysis-algorithm.

It is highly preferred within the present context that the machine learning master-algorithm and the analysis-algorithms are not part of the same application. In particular, the machine learning master-algorithm and the analysis-algorithms are distributed in a distributed computer environment. For example, the machine learning master-algorithm and the analysis-algorithms may be run on the same network but different servers. Especially, in a distributed computer environment, the machine learning master-algorithm is a client, and the analysis-algorithm is a server.

Thereby, it is in particular possible to run the method of the present invention in a distributed computer environment such as a cloud. Less memory space is needed thereby, in particular where two, three, or more image analyses are run in parallel.

According to embodiments, the machine learning master-algorithm is run on decentralized servers. This is advantageous for reasons of economizing computing time and also for reasons of confidentiality. It is also possible, but less preferred, that the machine learning master-algorithm is run as a local application, for example on a smartphone, a tablet computer, or a personal computer. The analysis-algorithms can either be run on decentralized servers or as local applications.

According to embodiments, the system of the present invention additionally comprises
(g1) a production unit configured to process the analyte according to the result of analysis, or
(g2) a quality control unit configured to allow, reject, and/or label the analyte according to the result of analysis.

Features and embodiments as described above also apply to this aspect of the invention.

In another aspect, the present invention relates to a method for the production, placement, installation, and/or quality control of a material, in particular a construction material, an industry assembly material, or an automotive material, said method comprising
(i) a step of producing, placing, installing, and/or accessing a material, and
(ii) a step of analyzing the material of step (i), said analysis comprising the steps of
   a) taking at least one digital image of the material by means of a camera,
   b) providing the at least one digital image to a machine learning master-algorithm,
   c) selecting, using the machine learning master-algorithm, at least one analysis-algorithm from a list of pre-defined analysis-algorithms, and sending the at least one digital image to the selected analysis-algorithm,
   d) analyzing the at least one digital image by the analysis-algorithm selected in step c),
   e) making available the result of analysis of step d) via the machine learning master-algorithm and/or via a user interface, a machine interface and/or on a data storage medium.

A construction material is a material used for construction of buildings. An industry assembly material is a material used for the assembly of products in industrial processes. An automotive material is a material used for the assembly of cars, trucks, busses, trains, or ships. The material, in particular a construction material, an industry assembly material, or an automotive material, preferably is an analyte as defined above.

Features and embodiments as described above also apply to this aspect of the invention.

It is possible for the analyte to be the location of placement or installation of the construction material. An example for this is an analyte which is a surface of a construction material having cracks, which cracks are to be refurbished, e.g. by filling or coating with a repair material. Another example for this is an analyte which is an excavation or void, which excavation or void is to be filled with a construction material such as a grouting material.

It is likewise possible for the analyte to be a constituent of the construction material. For example, the analyte can be a particulate material such as a dry binder or dry additive, an aggregate, or a filler. For example, the analyte can be a liquid material such as a dispersion-based binder or dispersion-based additive.

It is likewise possible that the analyte is the construction material after placement or installation, and optionally after curing. This is in particular relevant for quality control analysis of the correct placement or installation and optionally curing of the construction material.

### Figures

- Figure 1: Figure 1 is a representation of an embodiment of a method of the present invention having method steps (i) - (vi).
- Figure 2: Figure 2 is a representation of an embodiment of a method of the present invention having method steps (i) - (vi) and (viiia) or (viiib) and optionally (ia) and/or (vii).
- Figure 3: Figure 3 is a representation of a convolutional neural network suitable as a machine learning algorithm of the present invention.

### Exemplary embodiments

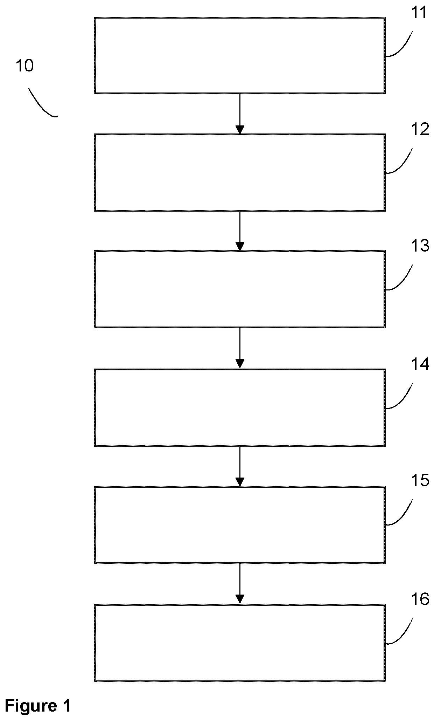

As shown in figure 1 a method of the present invention (10) starts with a step (11) of taking a digital image of an analyte. In a second step (12) the digital image is inputted into a machine learning master-algorithm. The machine learning master-algorithm selects at least one suitable analysis-algorithm in a third step (13). In a fourth step (14), the digital image is sent to the selected analysis-algorithm. In a fifth step (15), the digital image is analyzed by the selected analysis-algorithm. In a sixth step (16) the result of analysis is made available via the machine learning master-algorithm and/or via a user interface, via a machine interface, on a data storage medium.

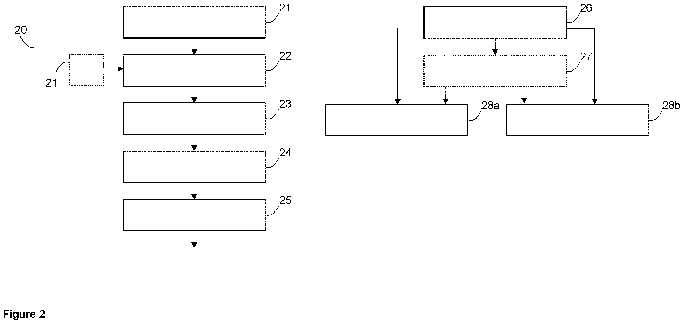

A method of the present invention may comprise additional steps as shown in figure 2. As shown in figure 2 a method of the present invention (20) starts with a step (21) of taking a digital image of an analyte. Optionally, an additional step (21a) of attaching an analytical question and/or method to the at least one digital image of the analyte is present. In a next step (22) the digital image is inputted into a machine learning master-algorithm. The machine learning master-algorithm selects at least one suitable analysis-algorithm in a next step (23). In a next step (24), the digital image is sent to the selected analysis-algorithm. In a next step (25), the digital image is analyzed by the selected analysis-algorithm. In a next step (26) the result of analysis is made available via the machine learning master-algorithm and/or via a user interface, via a machine interface, on a data storage medium. In a next step (28a) a production unit configured to process the analyte is operated. In the alternative, in a next step (28b) a quality control system configured to allow, to refuse, and/or to label the analyte is operated. Optionally, an additional step (27) of modelling, based on the result of analysis, the chemical and/or physical properties of an assembly comprising the analyte is included before steps 28a or 28b.

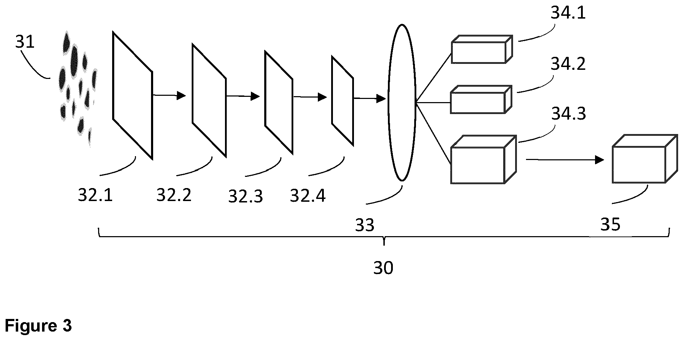

A convolutional neural network (30) with four convolutional and pooling layers (32.1 - 32.4) is shown in figure 3. A digital image (31) is inputted into the convolutional neural network (30). The digital image (31) can for example be a digital image of an analyte which is a surface having voids. Features are extracted and summarized in convolutional and pooling layers (32.1 - 32.4). A convolutional neural network having four convolutional and pooling layers (32.1 - 32.4) is depicted in figure 3 as an example. However, another number of convolutional and pooling layers is also possible. For example, 16 features can be extracted in the first layer, 32 features in the second layer, 64 features in the third layer, and 128 features in the fourth layer. At least one fully connected layer or dense layer (33) is used to determine the analytical method probabilities (34.1 - 34.3). The fully connected layer is a multilayer perceptron. For example, a first fully connected layer has a number of neurons which is 8 times the number of features of the last convolutional and pooling layer. A second fully connected layer may be present having a number of neurons which is one-half of the neurons of the first fully connected layer. Analytical method probabilities (34.1 - 34.3) are determined in the fully connected layer and the analytical method having the highest analytical method probability is selected as an output (35).

A convolutional neural network as shown in figure 3 was trained by supervised learning. Thereby, 250 images each of either a loose assembly of particles or of a flat surface having cracks was used. The analysis-algorithms were defined to an algorithm suitable to determine particle size distribution, which was associated with images of a loose assembly of particles, and an algorithm suitable to determine the width of cracks which was associated with images of a flat surface having cracks. In the training the batch size was kept to 4 and the training session was run for 80 epochs. The precision achieved after 80 epochs was 0.914 while recall was 0.793.

## Claims

1. A computer-implemented method for the analysis of images comprising the steps of
(i) taking at least one digital image of an analyte by means of a camera,
(ii) inputting the at least one digital image into a machine learning master-algorithm,
(iii) selecting, using the machine learning master-algorithm, at least one analysis-algorithm from a list of pre-defined analysis-algorithms,
(iv) transferring the digital image to the selected analysis-algorithm,
(v) analyzing the digital image by the selected analysis-algorithm,
(vi) making available the result of analysis obtained in step (v) via the machine learning master-algorithm and/or via a user interface, via a machine interface, on a data storage medium.

2. The method as claimed in any of the previous claims, **characterized in that** the analyte is selected from an assembly of loose particles; particles incorporated into an organic or inorganic binder matrix; a surface comprising holes, voids, bubbles, pores, or cracks; a surface having domains of differing color; a surface having efflorescence; a dispersion, in particular a foam, an aerosol, a suspension, or an emulsion; a surface of a construction material, in particular a coated surface, a surface of a cured mineral binder composition, a surface of an adhesive or sealant, a surface of a thermoplastic sheet; a composite material such as a multi-material composite; a fractured material.

3. The method as claimed in any of the previous claims, **characterized in that** the machine learning master-algorithm is trained by receiving as input a set of digital training images of analytes each digital image attached with an analytical method and at least one suitable analysis-algorithm.

4. The method as claimed in any of the previous claims, **characterized in that** the result of the analysis of step (v) is used to train the machine learning master-algorithm.

5. The method as claimed in any of the previous claims, **characterized in that** prior to or during step (ii) a mathematical function is applied to the digital image suitable for processing, editing, transforming, filtering, and/or labelling of the image data, preferably a cumulative distribution function or a wavelet transformation, especially a Laplace-Gaussian function.

6. The method as claimed in any of the previous claims, **characterized in that** in step (iii) the machine learning master-algorithm determines a plurality of analytical method probabilities, each analytical method probability representing a probability that the image should be analyzed with the respective analytical method, and selects the analysis-algorithm associated with the analytical method having the highest analytical method probability.

7. The method as claimed in any of the previous claims, **characterized in that** it additionally comprises a step of
(ia) attaching an analytical question and/or method to the at least one digital image of the analyte before and/or during inputting the image into the machine learning master-algorithm in step (ii).

8. The method as claimed in claim 7, **characterized in that** the analytical question and/or method attached to the at least one digital image of the analyte as defined in claim 7 is used to determine the plurality of analytical method probabilities.

9. The method as claimed in any of the previous claims, **characterized in that** the machine learning master-algorithm and the analysis-algorithms are distributed in a distributed computer environment.

10. The method as claimed in any of the previous claims, **characterized in that** it additionally comprises a step of
(vii) modelling, based on the result of analysis, the chemical and/or physical properties of an assembly comprising the analyte.

11. The method as claimed in any of the previous claims, **characterized in that** it additionally comprises a step of
(viii a) controlling a production unit configured to process the analyte, or
(viii b) controlling a quality control system configured to allow, to refuse, and/or to label the analyte.

12. A non-transitory computer-readable medium storing instructions that, when executed by a computer device, cause the computer device to carry out at least steps (ii) - (vi) of a method as claimed in any of claims 1-10.

13. A system comprising
(a) means for taking at least one digital image of an analyte,
(b) means for providing the at least one digital image of an analyte to a machine learning master-algorithm,
(c) a machine learning master-algorithm trained to select, based on a digital image of an analyte, at least one analysis-algorithm from a list of pre-defined analysis-algorithms,
(d) a set of analysis-algorithms suitable to analyze a digital image of an analyte to determine at least one chemical, physical, or mechanical property of said analyte,
(d) means for sending the digital image from the machine learning master-algorithm to the selected analysis-algorithm,
(e) means for transferring the result of analysis from the at least one analysis-algorithm to the master-algorithm,
(f) means for making available the result of analysis, in particular a user interface, a machine interface and/or a data storage medium.

14. The system as claimed in claim 13, **characterized in that** it comprises a first computer device storing instructions for the machine learning master-algorithm and at least one further computer device storing instructions for at least one analysis-algorithm.

15. The system as claimed in any of claims 13 - 14, additionally comprising
(g1) a production unit configured to process the analyte according to the result of analysis, or
(g2) a quality control unit configured to allow, reject, and/or label the analyte according to the result of analysis.

16. A method for the production, placement, installation, and/or quality control of materials, in particular a construction material, an industry assembly material, or an automotive material, said method comprising
(i) a step of producing, placing, installing, and/or accessing a material, and
(ii) a step of analyzing the material of step (i), said analysis comprising the steps of
a) taking at least one digital image of the material by means of a camera,
b) providing the at least one digital image to a machine learning master-algorithm,
c) selecting, using the machine learning master-algorithm, at least one analysis-algorithm from a list of pre-defined analysis-algorithms, and sending the at least one digital image to the selected analysis-algorithm,
d) analyzing the at least one digital image by the analysis-algorithm selected in step c),
e) making available the result of analysis of step d) via the machine learning master-algorithm and/or via a user interface, a machine interface and/or on a data storage medium.
